Europäisches Patentamt

**European Patent Office**

Office européen des brevets

(11) Publication number:

**0 309 227**
**A2**

## EUROPEAN PATENT APPLICATION

(21) Application number: 88308763.7

(22) Date of filing: 21.09.88

(51) Int. Cl.⁴: **C 09 K 5/06**

(30) Priority: 25.09.87 JP 241552/87

(43) Date of publication of application:
29.03.89 Bulletin 89/13

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100 (JP)

(72) Inventor: Matsuura, Satoshi
2-5, Misono 1-chome Otake
Hiroshima (JP)

Hirota, Toshio
12-6, Ushinoyacho 2-chome
Iwakuni Yamaguchi (JP)

(74) Representative: Myerscough, Philip Boyd et al
J.A.Kemp & Co. 14, South Square Gray's Inn
London, WC1R 5EU (GB)

(54) Heat storage chemical mixtures.

(57) A heat storage mixture free from explosive release of heat which comprises 100 parts by weight of sodium acetate trihydrate, 0.1 to 10 parts by weight of xanthan gum and 5 to 10 parts by weight of excess water.

EP 0 309 227 A2

## Description

### Heat Storage Chemical Mixtures

This invention relates to a heat storage chemical mixture, and more particularly to a chemical composition for the storage of heat energy utilizing heat of fusion of sodium acetate trihydrate which stores heat energy and from which the heat energy is released when needed.

Two methods are known to store heat energy. A first method utilizes sensible heat of a substance such as water or stone, and a second utilizes latent heat absorbed or liberated when a substance such as inorganic salt hydrates or organic crystalline substances undertake change of state, e.g., fusion.

However, the former method has disadvantages in that it usually needs a storage apparatus large in size and heavy in weight, and further the temperature of heat storing material itself decreases as the material liberates heat, or the material liberates heat uncontrollably depending upon the change in the ambient temperatures. On the contrary, the latter has an advantage in that a heat storage apparatus may be small in size since the latent heat is usually high, and the temperature decrease of the heat storing material is relative small after the material has released heat. However, there is also found a defect in the method, similarly to the former method, in that the heat storing material is often supercooled below the melting point and releases the heat stored therein rather explosively by, for example, mechanical stimuli such as shake or impact given thereto.

Thereore, a heat storage material utilizing latent heat of a material can be be used when it is desired that the heat stored therein be released controllably at any time and at any temperature desired, although such a material may be useful when used as a heating means, for example, to maintain the temperature in an agricultural vinyl house. This defect has been a reason why the heat storage material utilizing latent heat of a material is limited in use.

To obviate the problem of supercooling of the heat storage material as described above, there has been proposed a thermal energy storage mixture in Japanese Patent Laid-Opeen No. 61-19687 which contains sodium sulfate decahydrate, sodium chloride and hydrophilic polysaccharidessuch as xanthan gum which stabilizes the salt hydrate in a state of hydrogel in the presence of sodium chloride.

On the other hand, when a salt hydrate is subjected to many cycles of heating and cooling, i.e., melting and crystallizing, the salt hydrate tends to form salt hydrate of lower hydration or anhydrous salt so that phase separation takes place in the mixture to reduce the amount of thermal energy available, as is decribed in U.S. Patent No. 3,986,969. Thus, a heat energy storage mixture containing sodium sulfate decahydrate, borax and attapulgite clay as a gelling agent has been proposed in the aforesaid U.S. patent. A further improved mixture is also known which contains a salt hydrate or its eutectic such as sodium sulfate trihydrate or decahydrate and xanthan gum as a gelling agent, as is disclosed in Japanese Patent Laid-Open No. 60-58480.

The present inventors have made an intensive investigation to solve problems involved in the conventional heat storage chemical mixture, and found that a novel heat storage chemical composition is obtained which is free of explosive release of heat in the supercooled state by the addition of specified amount of water of excess to a system composed of sodium acetate trihydrate and xanthan gum to prevent the crystallization of the trihydrate.

It is, therefore, an object of the invention to provide a novel heat storage chemical mixture which is free from explosive release of heat and releases heat at any time and at ant temperature desired controllably.

The heat storage mixture of the invention comprises: sodium acetate trihydrate, xanthan gum in amounts of about 0.1-10 parts by weight in relation to 100 parts by weight of the sodium acetate trihydrate, and water of excess in amounts of about 5-10 parts by weight in relation to 100 parts by weight of the sodium acetate trihydrate.

Sodium acetate trihydrate has a high latent heat when it changes state. The trihydrate may be produced usually by neutralizing acetic acid with sodium hydroxide or sodium carbonate in water, or by adding sodium sulfate to a calcium acetate solution, removing the resulnt calcium sulfate by filtration, and then evaporating the water from the solution and the filtrate, respectively, thereby to provide sodium acetate trihydrate as residues. However, sodium acetate trihydrate used in the invention is not specifically limited in the methods of producing the same.

Xanthan gum is a hydrophilic heteropolysaccharide having a molecular weight of about two million to about fifty million and having D-glucose, D-mannose and D-glucuronic acid as structural units. The xanthan gum is obtained by microorganism fermentation of carbohydrates using Xanthomonas compestris, as is well known. The xanthan gum, however, is readily available as "Kelzan" (registered trademark) from Kelco Biospecialities, Ltd. (United Kingdom).

Xanthan gum is readily miscible with sodium sulfate trihydrate and is an excellent gelling agent to increase the viscosity of the heat storage mixture by stabilizing sodium acetate trihydrate in the form of hydrogel over a wide range of temperatures inclsive of temperatures below the melting point thereof, thereby to prevent not only the solidification or crystallization of the trihydrate at temperatures less than the melting point, but also the explosive release of heat in the supercooled state even when mechanical stimuli such as shake or impact are given thereto.

The heat storage mixture of the invention contains xanthan gum in amounts in the range of about 0.1-10 parts by weight, preferably in the range of about 0.5-5 parts by weight, and most preferably in the range of about 1-3 parts by weight, in relation to 100 parts by weight of sodium acetate trihydrate. When the amount of xanthan gum is less than about 0.1 part by weight in relation to 100 parts by weight of sodium acetate trihydrate used, sufficient increase in viscosity and stabilization of the mixture is not attained. On the other hand, when the amount of xanthan gum is more than about 10 parts by weight in relation to 100 parts by weight of sodium acetate trihydrate used, the latent heat of sodium acetate trihydrate is undesirably reduced remarkably.

The water of excess herein used means water present in the heat storage mixture of the invention in amounts more than the theoretical amount of water of crystallization of sodium acetate trihydrate used.

The water of excess used in the invention is preferably distilled water. The water of excess is contained in the heat storage mixture in amounts of about 5-10 parts by weight, preferably of about 5-8 parts by weight, most preferably of about 6-7 parts by weight, in relation to 100 parts by weight of sodium acetate trihydrate. When the amount of the water of excess is less than about 5 parts by weight in relation to 100 parts by weight of sodium acetate trihydrate, sodium acetate tends to crystallizes out and separates in the mixture, and therefore explosive release of heat is not completely prevented when the trihydrate is supercooled. Meanwhile when the amount of the water of excess is more than about 10 parts by weight in relation to 100 parts by weight of the trihydrate, the amount of available heat is remarkably reduced undesirably.

The heat storage mixture of the invention may contain inorganic salts or their hydrates other than sodium acetate trihydrate within such a limit that the addition thereof does not adversely affcet the mixture. Moreover, the mixture of the invention may contain any additive which is usually contained in conventional heat storage mixture utilizing latent heat, except a nucleating agent of which addition is contrary to the object of the invention to prevent the crystallization of the trihydrate below the melting point.

The heat storage mixture of the invention is not specifically limited, but it may be preferably prepared by first admixing sodium acetate trihydrate and xanthan gum in amounts of about 0.1-10 parts by weight in relation to 100 parts by weight of the sodium acetate trihydrate; and then adding to the resultant mixture water in amounts of about 5-10 parts by weight in relation to 100 parts by weight of the sodium acetate trihydrate; and stirring to form a uniform mixture, under heating if desired.

To store heat energy in the heat storage mixture of the invention, the following methods may be adopted, for examples only, among others: a container which contains the mixture is exposed to the solar rays to store the solar thermal energy therein; a heater is opearated utilizing low cost electric power at night, and the mixture is heated with the heater to store the thermal energy in the mixture; the thermal energy of waste gases or waters may be stored in the mixture by use of a heat exchanger; electricity is generated utilizing excess power of rotary machines to operate a heater, and the mixture is heated with the heater; or waste heat of internal combustion engines of such as automobiles is applied to the mixture.

In turn to release the thus stored thermal energy, by way of example only, a thin film which is likely to be a crystallized sodium acetate trihydrate on the surface of the mixture is broken with a rod and melted, and then a rod is inserted into the mixture in the form of hydrogel, thereby to take out the thermal energy through the rod. It is desired in particular that the mixture is stimulated with a rod which has at the top solids of the trihydrate. As another method, seed crystals may be added into the mixture so that it liberates the thermal energy stored therein.

As set forth above, since the heat storage mixture of the invention contains sodium acetate trihydrate, and xanthan gum and water of excess in specific amounts, respectively, the trihydrate is stabilized in the form of hydrogel and is prevented from crystallizing below the melting point so that the mixture is insensitive to mechanical stimuli such as shake or impact given thereto, and thus the mixture is free from explosive release of heat therefrom.

The heat storage mixture of the invention is therefore finds a variety of applications. It may be useful, for instance, as a heating means used in recreations such as fishing or diving, as a pocket heater, a home heater or a preheated for automobile engines in winter, or as a transfer means of heat.

The invention will now be described with reference to examples, to which, however, the invention is not limited.

Example

An amount of 100 parts by weight of sodium acetate trihydrate ($CH_3COONa.3H_2O$) and one part by weight of xanthan gum (Kelzan, registered trademark, by Kelco Biospecialities, Ltd.) were placed each in three necked flasks, and then to the mixtures were further added 5, 6, 7, 8 and 10 parts by weight of distilled water, respectively, in relation to 100 parts by weight of sodium acetate trihydrate.

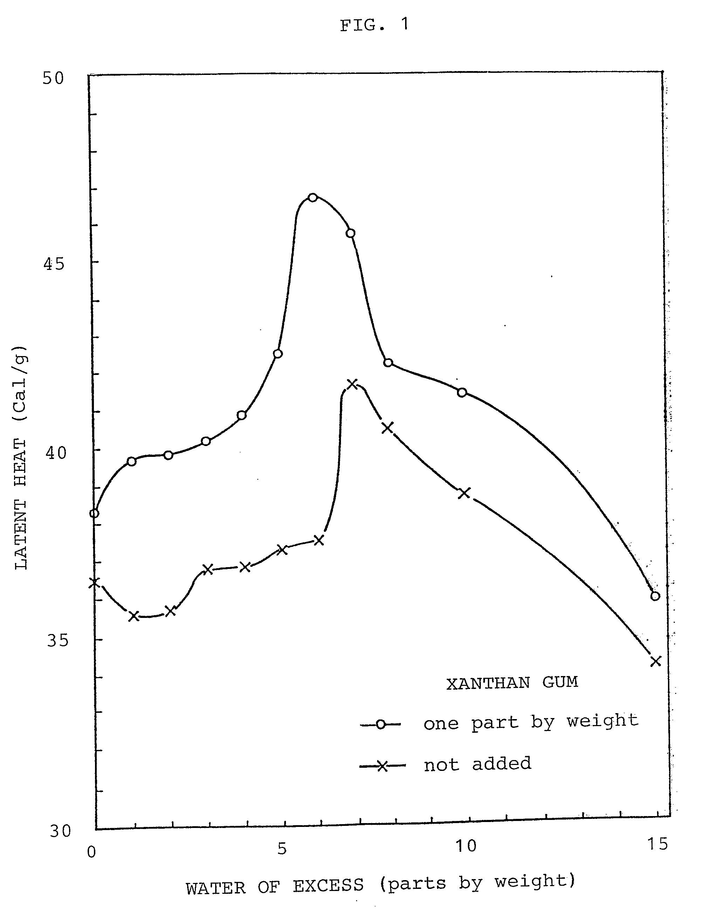

The mixtures were stirred over 30 minutes at 70°C on a water bath, and then the uniform mixtures were transferred into polyethylene bottles, respectively, and the bottles were air-tightly closed. After standing at 10°C for 10 hours, the latent heat released was measured with the each mixture by use of a Dewar flask. The relation between the latent heat released and the amount of the water of excess in the mixture is shown in Fig. 1.

Reference Example 1

No distilled water was added to the same mixture of sodium acetate trihydrate and xanthan gum, or an amount of 1, 2, 3, 4 or 15 parts by weight of distilled water was added, respectively, in relation to 100 parts by weight of sodium acetate trihydrate, and otherwise in the same manner as in Example, heat storage mixtures were prepared. The relation between the latent heat released and the amount of the water of excess in the mixture is shown in Fig. 1.

Reference Example 2

An amount of 100 parts by weight of sodium acetate trihydrate were placed each in a three necked flask, and then to the mixture were further added distilled water in varied amounts, respectively. The relation between the latent heat released and the amount of the water of excess in the mixture is shown in Fig. 1.

**Claims**

1. A heat storage mixture which comprises 100 parts by weight of sodium acetate trihydrate, 0.1 to 10 parts by weight of xanthan gum and 5 to 10 parts by weight of excess water.

2. A heat storage mixture according to claim 1 which contains 5 to 8 parts by weight of excess water.

3. A heat storage mixture according to claim 1 or 2 which contains 0.5 to 5 parts by weight of xanthan gum.

4. A method of preparing a heat storage mixture as claimed in claim 1, 2 or 3 which comprises mixing the sodium acetate trihydrate and xanthan gum and adding the excess water to the resultant mixture.

5. Use of a mixture as claimed in claim 1, 2 or 3 in the storage and subsequent release of heat energy.

FIG. 1